# EUROPÄISCHE PATENTSCHRIFT

(11) **EP 3 242 733 B1**
(45) Veröffentlichungstag und Bekanntmachung des Hinweises auf die Patenterteilung: **08.05.2019**
(21) Anmeldenummer: 16778216.8
(22) Anmeldetag: 15.09.2016
(51) Int. Cl.: A63H 30/04, B64C 39/02

(54) **IDENTIFIKATIONSVERFAHREN FÜR FERNGESTEUERTE GERÄTE**
IDENTIFICATION METHOD FOR REMOTE-CONTROLLED DEVICES
PROCÉDÉ D'IDENTIFICATION POUR APPAREILS TÉLÉCOMMANDÉS

(30) Priorität: 17.09.2015 DE 102015011802
(43) Veröffentlichungstag der Anmeldung: 15.11.2017
(73) Patentinhaber: Multiplex Modellsport GmbH & Co. KG, 75015 Bretten-Gölshausen (DE)
(72) Erfinder: JUHL, Andreas, 76703 Kraichtal (DE); WÖRNER, Dieter, 75223 Niefern-Öschelbronn (DE)
(74) Vertreter: Wacker, Jost Oliver
(86) Internationale Anmeldenummer: PCT/EP2016/071800
(87) Internationale Veröffentlichungsnummer: WO 2017/046231

(56) Entgegenhaltungen:
- EP-B1- 2 455 150
- US-A1- 2010 085 236
- Anonymous: "Luftverkehrs-Zulassungs-Ordnung (LuftVZO) Anlage 1 (zu 14 Abs. 1 und 19 Abs. 1) Vorschriften über den Eintragungsschein und das Lufttüchtigkeitszeugnis sow ie die Kennzeichnung von Luftfahrzeugen", , 1. Januar 2008 (2008-01-01), XP055322737, Gefunden im Internet: URL:https://www.gesetze-im-internet.de/luf tvzo/anlage_1.html [gefunden am 2016-11-24]

## Beschreibung

Die Erfindung betrifft ein Verfahren zur Identifikation eines elektronisch gesteuerten Fluggerätes in Form eines von einem Benutzer ferngesteuerten oder eines autonom gesteuerten, unbemannten Kleinfluggerätes, wie insbesondere eines Modellflugzeugs oder -hubschraubers, einer Drohne oder eines Multikopters mit einem oder mehreren vertikal wirkenden Rotoren, nach dem Oberbegriff des Anspruchs 1 sowie eine Elektronikeinrichtung zur Durchführung des Identifikationsverfahrens. Dabei werden in einem Speicherungsschritt Daten in einem Speicher des fern- oder autonom gesteuerten Geräts hinterlegt.

Dabei werden beim Speicherungsschritt benutzeridentische Daten hinterlegt, mittels denen die Identität des jeweiligen Benutzers oder Inhabers des fern- oder autonom gesteuerten Gerätes zweifelsfrei ermittelt werden kann. Derartige Daten können dabei beispielsweise Personalausweisdaten oder eine sonstige zuvor hinterlegte Registrierungskennung umfassen. Hierdurch ist es möglich, beispielsweise nach einem Unfall, bei einer Flugraumüberwachung oder auch nach einer mittels eines fern- oder autonom gesteuerten Fluggerätes begangenen Ordnungswidrigkeit oder Straftat den verantwortlichen Benutzer des elektronisch gesteuerten Fluggerätes zu ermitteln. Dabei ist es günstig, wenn die benutzeridentifizierenden Daten durch Personalausweisdaten und/oder eine Registrierungsnummer des Benutzers gebildet sind, wodurch der verantwortliche Benutzer oder Inhaber des fern- oder autonom gesteuerten Fluggerätes verlässlich bestimmt werden kann.

Aus EP 2 455 150 B1 ist ein ferngesteuertes Fluggerät bekannt, das einen Speicher aufweist, in dem Daten zur Identifikation des Modelltyps hinterlegt sind. Diese Daten können an eine Fernsteuerung gesendet werden, um diese genau auf das jeweilige Fluggerät abstimmen zu können.

Aufgrund der wachsenden Anzahl, Leistungsfähigkeit und Anwendungsmöglichkeiten von elektronisch gesteuerten Geräten, wie insbesondere Fluggeräten, besteht hierüber hinaus ein zunehmendes Interesse dahingehend, die Fluggeräte leichter dem verantwortlichen Benutzer zuordnen zu können. Dabei wäre es beispielsweise im Falle von Unfällen oder Verlusten von Fluggeräten oder bei der Überwachung von Lufträumen hilfreich, wenn zu den betreffenden Flugzeugen der jeweils verantwortliche Benutzer beziehungsweise Besitzer leichter ermittelt werden könnte. Auf diese Weise könnte auch ein verantwortungsvollerer und sichererer Umgang mit derartigen Fluggeräten im öffentlichen Raum gefördert werden.

US2010/085236A1 beschreibt ein Transponder-System für unbemannte, insbesondere militärische Fluggeräte. Hierbei werden seitens des Fluggerätes sowohl Positionsdaten als auch Identifikationsdaten gespeichert und abgegeben, durch die Kollisionen vermieden und Freund-Feind-Abklärungen durchgeführt werden können.

Die Aufgabe der Erfindung ist es daher, bei gattungsgemäßen Fluggeräten, den jeweils verantwortlichen Benutzer leichter ermitteln zu können.

Diese Aufgabe wird durch ein Identifikationsverfahren für elektronisch beziehungsweise fern- oder autonom gesteuerte Fluggeräte mit den Merkmalen des Anspruchs 1 gelöst. Dabei werden die benutzeridentifizierenden Daten zur Durchführung des Speicherungsschritts während einer Binding-Prozedur des elektronisch gesteuerten Geräts mit einem Sendegerät von dem Sendegerät an das elektronisch gesteuerte Gerät übertragen. Auf diese Weise ist es beispielsweise möglich, die benutzeridentifizierenden Daten dauerhaft und gegen Manipulation gesichert an einem Sendegerät, wie beispielsweise einer Fernsteuerung zu hinterlegen, und vor dem Betrieb des ferngesteuerten Geräts auf dieses zu übertragen. Der Betrieb des ferngesteuerten Geräts kann dabei beispielsweise von der Übertragung entsprechender Daten abhängig gemacht werden, so dass es erst dann gestartet werden kann, wenn die auf der verwendeten Fernsteuerung hinterlegten benutzeridentifizierenden Daten auf das ferngesteuerte Gerät übertragen und dort gespeichert worden sind. Zudem kann es dabei möglich sein, die in dem ferngesteuerten Gerät hinterlegten benutzeridentifizierenden Daten bei einem erneuten Binding Prozess mit einem anderen Sendegerät durch andere benutzeridentifizierende Daten zu ersetzen. Hierdurch ist der Betrieb eines ferngesteuerten Fluggeräts mit verschiedenen Fernsteuerungen und seitens verschiedener Benutzer möglich, wobei die benutzeridentifizierenden Daten des aktuellen Benutzers im Betrieb jeweils am ferngesteuerten Fluggerät hinterlegt sind. Dabei ist es ferner günstig, wenn die Übertragung der benutzeridentifizierenden Daten in Kombination mit der Übertragung einer Frequenz- beziehungsweise Kanaltabelle erfolgt, wodurch verhindert werden kann, dass das mit benutzeridentifizierenden Daten versehene ferngesteuerte Gerät von einem anderen Benutzer mit einer anderen Fernsteuerung betrieben wird.

Besonders vorteilhaft ist es zudem, wenn der Betrieb des Fluggerätes nur bei zuvor erfolgter Hinterlegung der benutzeridentifizierenden Daten freigegeben wird. Der Betrieb des Fluggeräts kann hierdurch von der Speicherung beziehungsweise Übertragung entsprechender Daten abhängig gemacht werden, so dass es erst dann gestartet werden kann, wenn die benutzeridentifizierenden Daten für einen möglichen Bedarfsfall zur Verfügung stehen.

In einer besonders vorteilhaften Ausführungsform werden die benutzeridentifizierenden Daten hierbei im Speicherungsschritt in einer gegen Veränderung geschützten Weise gespeichert. Auf diese Weise kann eine Manipulation der benutzeridentifizierten Daten und damit deren Missbrauch oder Unkenntlichmachung verhindert werden.

Dabei ist es günstig, wenn die benutzeridentifizierenden Daten in einem dem Speicherungsschritt nachfolgenden Schritt über ein Interface ausgelesen werden können. Hierdurch ist es möglich, beispielsweise nach einem Absturz oder einem sonstigen Unfall den Inhaber beziehungsweise den verantwortlichen Benutzer des betreffenden fern- oder autonom gesteuerten Fluggerätes ausfindig zu machen.

Vorteilhafterweise werden die benutzeridentifizierenden Daten in einem dem Speicherungsschritt nachfolgenden Sendevorgang vom fern- oder autonom gesteuerten Fluggerät gesendet, so dass diese auch ohne direkten Zugriff auf das Fluggerät, wie beispielsweise während dessen Fluges, ermittelt werden können.

Dabei ist es günstig, wenn der Sendevorgang im Betrieb des fern- oder autonom gesteuerten Fluggerätes selbsttätig erfolgt, so dass sichergestellt ist, dass die benutzeridentifizierenden Daten während des Betriebs des elektronisch gesteuerten Fluggeräts, wie insbesondere im Flug, eingelesen werden können. Vorteilhafterweise werden die benutzeridentifizierenden Daten hierzu während des Sendevorgangs wiederkehrend oder permanent gesendet. Hierdurch kann ein dauerhafter beziehungsweise wiederkehrender Zugriff auf die benutzeridentifizierenden Daten während der gesamten Dauer des Betriebs des fern- oder autonom gesteuerten Fluggerätes sichergestellt werden.

Ferner ist es günstig, wenn vor dem Sendevorgang eine Verschlüsselung der benutzeridentifizierenden Daten erfolgt. Auf diese Weise kann sichergestellt werden, dass die benutzeridentifizierenden Daten lediglich von hierfür autorisierten Personen eingesehen werden können.

In einer weiteren vorteilhaften Ausführungsform werden in einem weiteren Schritt Positionsdaten des fern- oder autonom gesteuerten Fluggerätes ermittelt, wobei die hierfür verwendeten Sensoren ebenfalls an dem fern- oder autonom gesteuerten Fluggerät vorgesehen sind. Auf diese Weise können an dem elektronisch gesteuerten Gerät neben den gespeicherten benutzeridentifizierenden Daten auch Positionsdaten hinterlegt werden, die während des Betriebs ermittelt werden.

Ferner ist es günstig, wenn die Positionsdaten zusätzlich zu den Identifikationsdaten im Speicher hinterlegt werden, wodurch diese zusammen mit den benutzeridentifizierenden Daten ausgelesen werden können. Auf diese Weise ist es beispielsweise möglich, nach einem Unfall oder einer Verletzung einer Flugraumsperrung die Flugroute eines involvierten Fluggerätes nachträglich prüfen zu können.

Darüber hinaus werden die Positionsdaten vorteilhafterweise während des Sendevorganges zusätzlich zu den Identifikationsdaten gesendet. Hierdurch kann beispielsweise eine bereits zurückgelegte Flugroute eines fern- oder autonom gesteuerten Fluggerätes noch während dessen Betriebs nachvollzogen werden.

Ferner wird die oben genannte Aufgabe durch eine Elektronikeinrichtung eines fern- oder autonom gesteuerten Fluggerätes für die Durchführung eines Verfahrens in einer der oben genannten Ausführungsform erfüllt, wobei der Speicher des fern- oder autonom gesteuerten Fluggerätes durch einen nichtflüchtigen Speicher gebildet ist. Auf diese Weise kann eine Manipulation der für das fern- oder autonom gesteuerte Fluggerät hinterlegten benutzeridentifizierenden Daten verhindert werden. Vorteilhafterweise ist der nichtflüchtige Speicher hierzu durch einen Mikrokontroller gebildet. Hierdurch ist es beispielsweise möglich, einen bereits vorhandenen Mikrokontroller des fern- oder autonom gesteuerten Fluggerätes zusätzlich auch zur Speicherung der benutzeridentifizierenden Daten zu verwenden. Alternativ hierzu ist es vorteilhaft, wenn der nichtflüchtige Speicher durch einen im fern- oder autonom gesteuerten Fluggerät festverbauten Flashspeicher der Flashspeicher, wie insbesondere durch einen electrically erasable programmable read-only memory (EEPROM) gebildet ist, wodurch der Speicher in einfacher Weise, mit geringem Gewicht und kostengünstig an dem fern- oder autonom gesteuerten Fluggerät zur Verfügung gestellt werden kann.

Vorteilhafterweise weist die Elektronikeinrichtung zudem Mittel, wie insbesondere in Form eines gespeicherten Programmproduktes, auf, die einen Betrieb des Fluggerätes nur bei zuvor erfolgter Hinterlegung der benutzeridentifizierenden Daten freigeben. Auf diese Weise kann das Fluggerät erst dann gestartet werden, wenn die zur Identifizierung des Benutzers benötigten Daten zur Verfügung stehen.

Darüber hinaus wird die oben genannte Aufgabe durch eine Sende-Empfangs-Anordnung bestehend aus der Elektronikeinrichtung eines ferngesteuerten Fluggeräts in einer der oben genannten Ausführungsformen und einem Sendegerät, insbesondere in Form einer Fernsteuerung, gelöst, wobei die Elektronikeinrichtung über eine Binding-Prozedur mit dem Sendegerät zeitlich synchronisiert werden kann. Bei dieser Synchronisierung kann beispielsweise eine gemeinsame Frequenz-Hoppingtabelle erstellt beziehungsweise übertragen werden, auf deren Basis die Signalübertragung zwischen Sendegerät und ferngesteuertem Fluggerät erfolgt.

In einer besonders bevorzugten Ausführungsform weist das Sendegerät dabei einen nichtflüchtigen senderseitigen Speicher zur Speicherung der benutzeridentifizierenden Daten auf. Der senderseitige Speicher kann hierzu ebenfalls durch einen Mikrokontroller oder durch einen Flashspeicher gebildet sein. Auf diese Weise können die benutzeridentifizierenden Daten zunächst auf dem Sendegerät hinterlegt sein, um dann vor der Inbetriebnahme eines ferngesteuerten Fluggeräts auf dieses während der Binding-Prozedur übertragen zu werden. Auf diese Weise kann das ferngesteuerte Fluggerät vor jeder Inbetriebnahme mittels einer Binding-Prozedur jeweils einem neuen Benutzer fest zugeordnet werden.

Ferner ist es günstig, wenn ferner eine Empfangsvorrichtung an einer Bodenstation oder an einem weiteren Fluggerät vorgesehen ist und die benutzeridentifizierenden Daten seitens der Empfangsvorrichtung auslesbar sind. Die Empfangsvorrichtung kann hierzu vorab auf die die benutzeridentifizierenden Daten sendende Elektronikeinrichtung abgestimmt sein, insbesondere auf deren Sendefrequenzen und gegebenenfalls auf deren Verschlüsselung. Auf diese Weise kann ein sicherer Empfang der von den ferngesteuerten Fluggeräten gesendeten Daten an der jeweiligen Empfangsvorrichtung beispielsweise zum Zwecke einer Flugraumüberwachung sichergestellt werden.

In den Figuren ist eine beispielhafte Ausführungsform der Erfindung dargestellt. Es zeigen:
- Figur 1: ein System bestehend aus einem ferngesteuerten Fluggerät, einem Sendegerät und einer Empfangsvorrichtung und
- Figur 2: ein Ablaufdiagramm des erfindungsgemäßen Identifikationsverfahrens.

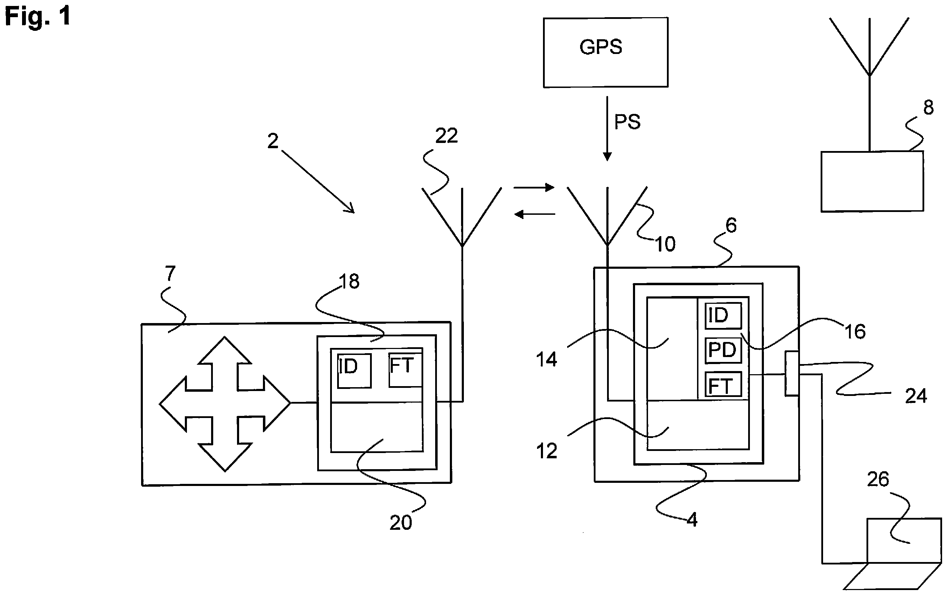

Fig. 1 zeigt eine Sende-Empfangs-Anordnung 2 mit einer erfindungsgemäßen Elektronikeinrichtung 4 eines elektronisch gesteuerten Fluggerätes 6 in Form eines von einem Benutzer ferngesteuerten, unbemannten Fluggerätes, einem Sendegerät 7 in Form einer Fernsteuerung und einer Empfangsvorrichtung 8.

Das elektronisch gesteuerte Fluggerät 6 kann dabei beispielsweise durch ein Fluggerät in Form eines Modellflugzeuges, eines Modellhelikopters oder einer Drohne mit mehreren in vertikaler Richtung wirkenden Rotoren gebildet sein. Dabei weist das ferngesteuerte Fluggerät 6 eine geräteseitige Antenne 10 auf, die mit der Elektronikeinrichtung 4 verbunden ist.

Zum Senden und Empfangen von Daten weist die Elektronikeinrichtung 4 des ferngesteuerten Fluggerätes 6 einen geräteseitigen Transceiver 12 auf.

Alternativ zum dargestellten ferngesteuerten Fluggerät kann das elektronisch gesteuerte Fluggerät 6 auch durch ein autonom gesteuertes Fluggerät gebildet sein, dessen Elektronikeinrichtung 4 eine hierfür geeignete Software aufweist und mit einer entsprechenden Sensorik verbunden ist (nicht dargestellt).

In jedem Fall umfasst die Elektronikeinrichtung 4 eine GPS-Einrichtung 14 zur Ermittlung von Positionsdaten PD aus empfangenen Signalen PS eines GPS-Systems GPS und einen geräteseitigen Speicher 16.

Der geräteseitige Speicher 16 ist dabei beispielhaft durch einen nichtflüchtigen Mikrokontroller gebildet, so dass die darauf abgespeicherten Daten nicht von einem Benutzer des elektronisch gesteuerten Fluggerätes 6 verändert oder gelöscht werden können. Alternativ hierzu kann der geräteseitige Speicher 16 auch durch einen festverbauten Flashspeicher in Form eines electrically erasable programmable read-only memory (EEPROM) gebildet sein.

In jedem Fall dient der geräteseitige Speicher 16 zur Hinterlegung von benutzeridentifizierenden Daten ID, die beispielsweise durch Personalausweisdaten oder eine Registrierungsnummer des Benutzers oder Eigentümers des Fluggerätes 6 gebildet sein können. Die benutzeridentifizierenden Daten ID können beispielsweise im Zuge einer Binding-Prozedur vom Sendegerät 7 zur Elektronikeinrichtung 4 des Fluggerätes 6 übertragen werden. Hierzu ist an dem Sendegerät 7 ein senderseitiger Speicher 18 vorgesehen, in dem die benutzeridentifizierenden Daten ID hinterlegt sind, die während der Binding-Prozedur über einen senderseitigen Transceiver 20 und eine senderseitige Antenne 22 zum Fluggerätes 6 gesendet werden.

Es können zudem auch Mittel vorgesehen sein, wie beispielsweise in Form eines in der Elektronikeinrichtung 4 hinterlegten Programms, die einen Betrieb des Fluggerätes 6 nur bei zuvor erfolgter Hinterlegung der benutzeridentifizierenden Daten ID freigeben (nicht dargestellt).

Ferner kann in dem senderseitigen Speicher 18 eine Frequenz-Hoppingtabelle FT hinterlegt sein, die bei der Binding-Prozedur ebenfalls auf die Elektronikeinrichtung 4 übertragen und im geräteseitigen Speicher 16 hinterlegt wird. Zudem werden in dem geräteseitigen Speicher 16 auch die mittels der GPS-Einrichtung 14 ermittelten Positionsdaten PD hinterlegt.

Über ein mit dem geräteseitigen Speicher 16 verbundenes Interface 24 der Elektronikeinrichtung 4, das beispielsweise durch eine USB-Buchse oder einen anderen üblichen Anschluss gebildet ist, kann der Speicher mit einem Auslesegerät 26, wie insbesondere einem Computer verbunden werden. Auf diese Weise können zumindest die hierauf hinterlegten benutzeridentifizierenden Daten ID ausgelesen werden, um beispielsweise nach der Bergung eines verlorengegangenen elektronisch gesteuerten Fluggerätes 6 oder nach einem Unfall, einer Ordnungswidrigkeit oder einer Straftat unter Beteiligung eines elektronisch gesteuerten Fluggerätes 6 die Identität des betreffenden Benutzers und/oder Inhabers ermitteln zu können.

Darüber hinaus werden die im geräteseitigen Speicher 16 hinterlegten benutzeridentifizierenden Daten ID und die Positionsdaten PD im Betrieb des elektronisch gesteuerten Fluggerätes 6 selbsttätig gesendet, wodurch sie beispielsweise von der Empfangsvorrichtung 8 empfangen werden können, die beispielsweise zur

Überwachung eines Luftraumes an einer Bodenstation oder an einem Fluggerät (nicht dargestellt) betrieben wird.

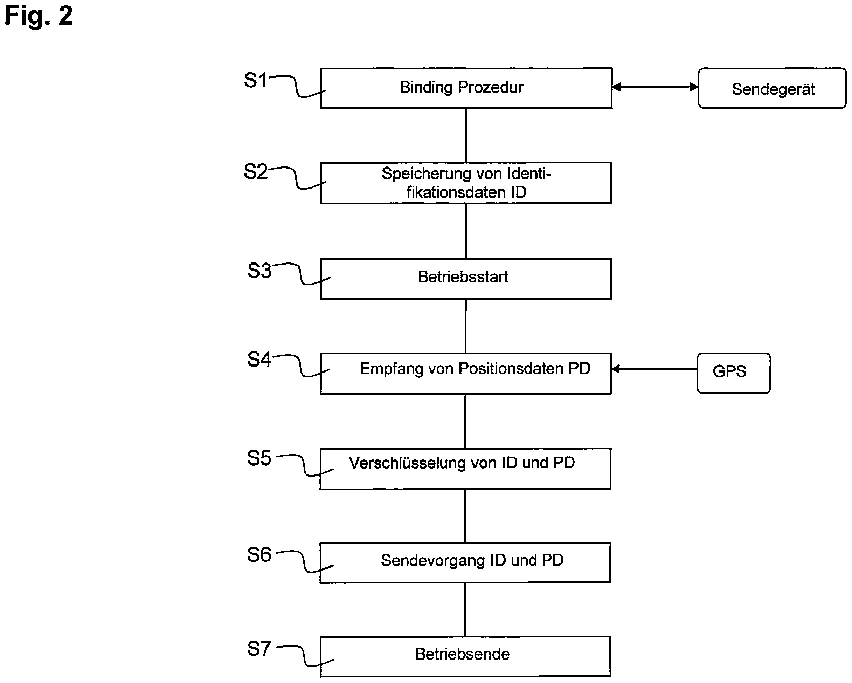

Der Ablauf eines mittels der Elektronikeinrichtung 4 durchgeführten beispielhaften Identifikationsverfahrens erfolgt dabei gemäß dem Flussdiagramm nach Fig. 2:
In einem ersten Schritt S1 wird dabei die Binding-Prozedur zwischen der Elektronikeinrichtung 4 und dem Sendegerät 7 durchgeführt, bei der sich diese zeitlich synchronisieren und die Frequenz-Hoppingtabelle erstellt beziehungsweise vom Sendegerät 7 auf das elektronisch gesteuerte Fluggerät 6 übertragen wird. Sobald die zeitliche Synchronisierung hergestellt ist, erfolgt zudem die Übertragung der benutzeridentifizierenden Daten ID auf den geräteseitigen Speicher 16.

In einem zweiten Schritt S2, der einem Speicherungsschritt entspricht, werden die benutzeridentifizierenden Daten ID nun in dem geräteseitigen Speicher 16 hinterlegt, wo sie nicht mehr verändert oder gelöscht werden können. Da bei der Übertragung der Daten ID bereits eine Kanalzuordnung mittels der Frequenz-Hoppingtabelle erfolgt und der nichtflüchtige geräteseitige Speicher 16 nach der Speicherung der Daten ID keine Veränderungen an diesen ermöglicht, kann ein Missbrauch der hinterlegten Daten ID beziehungsweise ein Betrieb des elektronisch gesteuerten Fluggerätes 6 unter einer anderen Kennung ausgeschlossen werden. Eine Veränderung oder eine Einsichtnahme der benutzeridentifizierenden Daten ID kann dabei lediglich seitens offizieller Stellen oder eines Anbieters des elektronisch gesteuerten Fluggerätes 6 vorgesehen sein. Dabei kann die Veränderung oder die Einsichtnahme beispielsweise unter Verwendung eines geschützten Zuganges über das Interface 24 erfolgen, über das die gespeicherten Daten auch ausgelesen werden können.

Nach einer Inbetriebnahme des elektronisch gesteuerten Fluggerätes 6 in einem dritten Schritt S3 erfolgt dann in einem vierten Schritt S4 der Empfang von GPS-Daten PS des GPS-Systems über die geräteseitige Antenne 10. Über die GPS-Einrichtung 14 werden aus diesen die aktuellen Positionsdaten PD des elektronisch gesteuerten Fluggerätes 6 ermittelt und im geräteseitigen Speicher 16 hinterlegt.

Anschließend werden die in der Elektronikeinrichtung 4 hinterlegten benutzeridentifizierenden Daten ID und gegebenenfalls auch die Positionsdaten PD in einem fünften Schritt S5 verschlüsselt.

In der verschlüsselten Form werden die Daten ID, PD dann in einem in Abhängigkeit von der Inbetriebnahme des elektronisch gesteuerten Fluggerätes 6 selbsttätig gestarteten Sendevorgang gemäß Schritt 6 über den geräteseitigen Transceiver 12 und die geräteseitige Antenne 10 ausgesendet. Die Daten ID, PD werden hierbei permanent oder in kurzen zeitlichen Abständen wiederkehrend ausgesendet, so dass sie nun von der Empfangsvorrichtung 8 empfangen werden können. Die Empfangsvorrichtung 8 ist hierzu auf die Sendefrequenzen des geräteseitigen Transceivers 12 abgestimmt und ist ferner in der Lage die empfangenen Daten ID, PD zu entschlüsseln.

Der Sendevorgang gemäß S6 erfolgt dabei solange, bis der Betrieb in Schritt S7 beendet wird.

Anschließend können die im geräteseitigen Speicher 16 hinterlegten benutzeridentifizierenden Daten ID und die Positionsdaten PD auch weiterhin über das Interface 24 mittels Auslesegerät 26 eingesehen werden, um den Benutzer zu identifizieren und beispielsweise eine zurückgelegte Flugroute des elektronisch gesteuerten Fluggerätes 6 rekonstruieren zu können. Auf diese Weise ist es beispielsweise Behörden wie der Flugüberwachung oder der Polizei möglich, den Benutzer zu identifizieren und die Verletzung einer Flugraumsperrung oder eines Unfallherganges prüfen zu können.

Mittels Durchführung der Binding-Prozedur gemäß S1 mit einem anderen Sendegerät 7 können dann die benutzeridentifizierenden Daten ID eines neuen Benutzers im geräteseitigen Speicher 16 hinterlegt werden, so dass das Verfahren gemäß der Schritte S1 bis S7 dann auf Basis dieser neuen benutzeridentifizierenden Daten ID durchgeführt wird.

## Patentansprüche

1. Verfahren zur Identifikation eines elektronisch gesteuerten Fluggerätes (6) in Form eines fern- oder autonom gesteuerten, unbemannten Kleinfluggerätes, wie insbesondere eines Modellflugzeugs- oder hubschraubers, einer Drohne oder eines Multikopters mit einem oder mehreren vertikal wirkenden Rotoren,
wobei in einem Speicherungsschritt (S2) benutzeridentifizierende Daten (ID) in Form von Personalausweisdaten oder einer zuvor hinterlegten Registrierungskennung des Benutzers oder des Inhabers des Fluggerätes (6) in einem Speicher (16) des Fluggeräts (6) gespeichert werden,
**dadurch gekennzeichnet, dass** die benutzeridentifizierenden Daten (ID) vor dem Speicherungsschritt (S2) während einer Binding Prozedur (S1) des Fluggeräts (6) mit einem Sendegerät (7) von dem Sendegerät (7) an das Fluggerät (6) übertragen werden und der Betrieb des Fluggerätes (6) nur bei erfolgter Hinterlegung der benutzeridentifizierenden Daten (ID) freigegeben wird.

2. Verfahren nach Anspruch 1, **dadurch gekennzeichnet, dass** die benutzeridentifizierenden Daten (ID) im Speicherungsschritt (S2) in einer gegen Veränderung geschützten Weise gespeichert werden.

3. Verfahren nach Anspruch 1 oder 2, **dadurch gekennzeichnet, dass** die benutzeridentifizierenden Daten (ID) in einem dem Speicherungsschritt nachfolgenden Schritt über ein Interface ausgelesen werden können.

4. Verfahren nach einem der Ansprüche 1 bis 3, **dadurch gekennzeichnet, dass** die benutzeridentifizierenden Daten (ID) in einem dem Speicherungsschritt nachfolgenden Sendevorgang (S6) vom Fluggerät (6) gesendet werden.

5. Verfahren nach Anspruch 4, **dadurch gekennzeichnet, dass** der Sendevorgang (S6) im Betrieb des Fluggeräts (6) selbsttätig erfolgt.

6. Verfahren nach Anspruch 4 oder 5, **dadurch gekennzeichnet, dass** vor dem Sendevorgang (S6) eine Verschlüsselung (S5) der benutzeridentifizierenden Daten (ID) erfolgt.

7. Verfahren nach einem der Ansprüche 1 bis 6, **dadurch gekennzeichnet, dass** in einem weiteren Schritt (S4) Positionsdaten (PD) des Fluggeräts (6) ermittelt werden.

8. Verfahren nach Anspruch 7, **dadurch gekennzeichnet, dass** die Positionsdaten (PD) zusätzlich zu den Identifikationsdaten (ID) im Speicher (16) hinterlegt werden.

9. Verfahren nach Anspruch 7 oder 8, **dadurch gekennzeichnet, dass** die Positionsdaten (PD) während des Sendevorganges (S6) zusätzlich zu den Identifikationsdaten (ID) gesendet werden.

10. Elektronikeinrichtung eines ferngesteuerten Fluggerätes für die Durchführung eines Verfahrens nach einem der Ansprüche 1 bis 9, **dadurch gekennzeichnet, dass** der Speicher (16) der Elektronikeinrichtung des Fluggeräts (6) durch einen nichtflüchtigen Speicher in Form eines Mikrokontrollers oder eines im Fluggerät (6) festverbauten electrically erasable programmable read-only memory (EEPROM) Flashspeichers gebildet ist.

11. Elektronikeinrichtung nach Anspruch 10, **dadurch gekennzeichnet, dass** Mittel vorgesehen sind, die einen Betrieb des Fluggerätes (6) nur bei erfolgter Hinterlegung der benutzeridentifizierenden Daten (ID) freigeben.

12. Sende-Empfangs-Anordnung bestehend aus der Elektronikeinrichtung eines ferngesteuerten Fluggerätes in Form eines fern- oder autonom gesteuerten, unbemannten Kleinfluggerätes, wie insbesondere eines Modellflugzeugs- oder hubschraubers, einer Drohne oder eines Multikopters mit einem oder mehreren vertikal wirkenden Rotoren nach Anspruch 10 oder 11, einem Sendegerät (7) und einer Empfangsvorrichtung (8) an einer Bodenstation oder an einem weiteren Fluggerät, **dadurch gekennzeichnet, dass** die Elektronikeinrichtung (4) über eine Binding-Prozedur mit einem Sendegerät (7) synchronisierbar ist und zusätzlich eine Empfangsvorrichtung (8) an der Bodenstation oder an dem weiteren Fluggerät vorgesehen ist, mittels der die benutzeridentifizierenden Daten (ID) auslesbar sind.

13. Sende-Empfangs-Anordnung nach Anspruch 12, **dadurch gekennzeichnet, dass** das Sendegerät (7) einen nichtflüchtigen sendeseitigen Speicher (18) zur Speicherung der benutzeridentifizierenden Daten (ID) aufweist.

## Claims

1. Method for the identification of an electronically-controlled aircraft (6), in the form of a remotely or autonomously controlled unmanned small aircraft, such as, in particular, a model aircraft or model helicopter, a drone, or a multicopter with one or more vertical-effect rotors,
wherein, in a memory storage step (S2), user-identifying data (ID) in the form of personal identification document data or a previously deposited registration identification of the user or of the owner of the aircraft (6) are stored in a memory (16) of the aircraft (6),
**characterised in that,** before the memory storage step (S2), during a binding procedure (S1) of the aircraft (6), the user-identifying data (ID) is transferred by a transmitter device (7), from the transmitter device (7) to the aircraft (6), and the operation of the aircraft (6) is only released when the user-identifying data (ID) has been successfully deposited.

2. Method according to claim 1, **characterised in that** the user-identifying data (ID) is stored in the memory storage step (S2) in a manner that is protected against change.

3. Method according to claim 1 or 2, **characterised in that** the user-identifying data (ID) can be read out by way of an interface in a step following the memory storage step.

4. Method according to any one of claims 1 to 3, **characterised in that** the user-identifying data (ID) is transmitted from the aircraft (6) in a transmitting procedure (S6) following the memory storage step.

5. Method according to claim 4, **characterised in that** the transmitting procedure (S6) takes place automatically when the aircraft (6) is in operation.

6. Method according to claim 4 or 5, **characterised in that,** before the transmitting procedure (S6), the user-identifying data (ID) undergoes encoding (S5).

7. Method according to any one of claims 1 to 6, **characterised in that,** in a further step (S4), position data (PD) of the aircraft (6) is determined.

8. Method according to claim 7, **characterised in that** the position data (PD) is deposited in the memory (16) in addition to the identification data (ID).

9. Method according to claim 7 or 8, **characterised in that,** during the transmitting procedure (S6), the position data (PD) is transmitted in addition to the identification data (ID).

10. Electronic device of a remote-controlled aircraft for carrying out a method according to any one of claims 1 to 9, **characterised in that** the memory (16) of the electronic device of the aircraft (6) is formed by a non-volatile memory in the form of a microcontroller or of an electrically erasable programmable read-only memory (EEPROM) permanently installed in the aircraft (6).

11. Electronic device according to claim 10, **characterised in that** means are provided which only release the operation of the aircraft (6) when the user-identifying data (ID) has been successfully deposited.

12. Transmitting-receiving arrangement consisting of the electronic device of a remote-controlled aircraft in the form of a remote-controlled or autonomously-controlled unmanned small aircraft, such as, in particular, a model aircraft or model helicopter, a drone, or a multicopter with one or more vertical-effect rotors, according to claim 10 or 11, a transmitting device (7) and a reception device (8) at a ground station or in a further aircraft, **characterised in that** the electronic device (4) can be synchronised in a binding procedure with a transmitting device (7), and, in addition, a receiver device (8) is provided at the ground station or in the further aircraft, by means of which the user-identifying data (ID) can be read out.

13. Transmitting-receiving arrangement according to claim 12, **characterised in that** the transmitting device (7) comprises a non-volatile transmitting-side memory (18) for storing the user-identifying data (ID).

## Revendications

1. Procédé pour l'identification d'un engin volant commandé électroniquement (6) sous forme d'un petit engin volant télécommandé ou autonome, sans pilote, comme notamment un modèle réduit d'avion ou d'hélicoptère, un drone ou un multicoptère comprenant un ou plusieurs rotors à action verticale,
dans lequel lors d'une étape d'enregistrement (S2) des données d'identification de l'utilisateur (ID) sont enregistrées dans la mémoire (16) de l'engin volant (6) sous forme de données d'identification officielle personnelle ou d'un identifiant d'enregistrement préalablement enregistré de l'utilisateur ou du titulaire de l'engin volant (6),
**caractérisé en ce que** les données d'identification de l'utilisateur (ID) sont transmises d'un émetteur (7) à l'engin volant (6) pendant une procédure de liaison (S1) de l'engin volant (6) avec l'émetteur (7) avant l'étape d'enregistrement (S2), et le fonctionnement de l'engin volant (6) n'est autorisé qu'après la consignation des données d'identification de l'utilisateur (ID).

2. Procédé selon la revendication 1, **caractérisé en ce que** les données d'identification de l'utilisateur (ID) sont enregistrées de manière protégées contre le changement lors de l'étape d'enregistrement (S2).

3. Procédé selon la revendication 1 ou 2, **caractérisé en ce que** les données d'identification de l'utilisateur (ID) peuvent être lues via une interface lors d'une étape ultérieure à l'étape d'enregistrement.

4. Procédé selon l'une des revendications 1 à 3, **caractérisé en ce que** les données d'identification de l'utilisateur (ID) sont émises de l'engin volant (6) dans un processus d'envoi (S6) ultérieur à l'étape d'enregistrement.

5. Procédé selon la revendication 4, **caractérisé en ce que** le processus d'envoi (S6) s'effectue de manière automatique pendant le fonctionnement de l'engin volant (6).

6. Procédé selon la revendication 4 ou 5, **caractérisé en ce qu'**un cryptage (S5) des données d'identification de l'utilisateur (ID) s'effectue avant le processus d'envoi (S6).

7. Procédé selon l'une des revendications 1 à 6, **caractérisé en ce que** des données de position (PD) de l'engin volant (6) sont déterminées lors d'une étape supplémentaire (S4).

8. Procédé selon la revendication 7, **caractérisé en ce que** les données de position (PD) sont enregistrées en plus des données d'identification (ID) dans la mémoire (16).

9. Procédé selon la revendication 7 ou 8, **caractérisé en ce que** les données de position (PD) sont émises en plus des données d'identification (ID) pendant le processus d'envoi (S6).

10. Dispositif électronique d'un engin volant télécommandé, pour la mise en oeuvre d'un procédé selon l'une des revendications 1 à 9, **caractérisé en ce que** la mémoire (16) du dispositif électronique de l'engin volant (6) est constitué par une mémoire non volatile sous forme d'un microcontrôleur ou d'une mémoire flash du type mémoire morte effaçable électriquement et programmable (EEPROM) intégrée dans l'engin volant.

11. Dispositif électronique selon la revendication 10, **caractérisé en ce que** des moyens sont prévus qui autorisent un fonctionnement de l'engin volant (6) qu'après la consignation des données d'identification de l'utilisateur (ID).

12. Ensemble émetteur/récepteur constitué par un dispositif électronique d'un engin volant télécommandé sous forme d'un petit engin volant télécommandé ou autonome, comme notamment un modèle réduit d'avion ou d'hélicoptère, un drone ou un multicoptère comprenant un ou plusieurs rotors à action verticale selon la revendication 10 ou 11, un émetteur (7) et un dispositif de réception (8) au niveau d'une station terrestre ou au niveau d'un autre engin volant, **caractérisé en ce que** le dispositif électronique (4) peut être synchronisé par une procédure de liaison avec un émetteur (7), et un dispositif de réception (8) est également prévu au niveau d'une station terrestre ou au niveau d'un autre engin volant, au moyen duquel peuvent être lues les données d'identification de l'utilisateur (ID).

13. Ensemble émetteur/récepteur selon la revendication 12, **caractérisé en ce que** l'émetteur (7) comprend une mémoire (18) coté émetteur non volatile pour le stockage des données d'identification de l'utilisateur (ID).
